(19) **Europäisches Patentamt**

**European Patent Office**

**Office européen des brevets**

(11) **EP 0 737 705 B1**

(12) **EUROPÄISCHE PATENTSCHRIFT**

(45) Veröffentlichungstag und Bekanntmachung des Hinweises auf die Patenterteilung:
**13.06.2001 Patentblatt 2001/24**

(51) Int Cl.$^7$: **C08G 75/00**, C08G 75/02

(21) Anmeldenummer: **96105007.7**

(22) Anmeldetag: **29.03.1996**

(54) **Verfahren zur Herstellung von Polyarylensulfiden**

Process for the preparation of polyarylene sulfides

Procédé pour la préparation de polyarylènsulfures

(84) Benannte Vertragsstaaten:
**DE FR GB IT**

(30) Priorität: **13.04.1995 DE 19513479**

(43) Veröffentlichungstag der Anmeldung:
**16.10.1996 Patentblatt 1996/42**

(73) Patentinhaber: **Ticona GmbH**
**65451 Kelsterbach (DE)**

(72) Erfinder:
• **Haubs, Michael, Dr.**
**55545 Bad Kreuznach (DE)**
• **Schleicher, Andreas, Dr.**
**65614 Beselich (DE)**
• **Nicklas, Thorsten**
**35039 Marburg (DE)**

(56) Entgegenhaltungen:
EP-A- 0 527 055          US-A- 4 645 826
US-A- 4 960 861

• PATENT ABSTRACTS OF JAPAN vol. 010, no. 245 (C-368), 22.August 1986 & JP 61 076528 A (DAINIPPON INK & CHEM INC), 19.April 1986,
• PATENT ABSTRACTS OF JAPAN Bd. 010, Nr. 230 (C-365) 09 August 1986 & JP 61 066 720 A (KUREHA CHEM IND CO LTD) 05 April 1986

**Beschreibung**

Die Erfindung betrifft ein Verfahren zur Herstellung von linearen oder verzweigten Polyarylensulfiden, insbesondere von Polyphenylensulfid (PPS).

Polyarylensulfide und Polyphenylensulfid (PPS), zeichnen sich durch außergewöhnliche Temperaturstabilität und hervorragende Chemikalienbeständigkeit aus und sind daher für technische Anwendungen sehr interessant.

Die Herstellung von PPS wird beispielsweise in US 4,910,294 beschrieben und erfolgt danach aus Phenylendihalogeniden, insbesondere Dichlorbenzol (DCB), und Natriumsulfid in einem hochsiedenden, dipolar aprotischen Lösungsmittel wie Methylpyrrolidon (NMP). Die Reaktionstemperaturen liegen bei 220 °C bis 270 °C, die Reaktionszeiten bei 5-12 h. Jedoch ist es nicht ohne weiteres möglich, für technische Anwendungen genügend hohe Molmassen zu erreichen. Man hilft sich damit, daß die Polymeren einem "Röstprozeß" unterzogen werden oder mit der Zugabe von trifunktionellen Comonomeren, wie Trichlorbenzol zum Reaktionsansatz. Die Polymere sind dann aber verzweigt, was für die Anwendung oft Nachteile mit sich bringt, weil z. B. die Zähigkeit herabgesetzt wird. Eine weitere Möglichkeit, hohe Molekulargewichte zu erzielen, besteht in der Zugabe von Wasser in einer zweiten Reaktionsstufe und Erhitzen der Reaktionsmischung auf 260 °C. Dies kann auch in einem Zweistufenprozeß erfolgen (EP 0256757, EP 0259984, US 4,794,164), jedoch müssen hier große Mengen an Wasser zugesetzt werden (6 bis 15 mol Wasser pro kg Lösungsmittel), so daß sich ein Zweiphasensystem ausbildet. Diese Verfahren haben jedoch den Nachteil, daß lange Reaktionszeiten erforderlich sind, das Lösungsmittel sich teilweise zersetzt (Bildung von Methylamin) und außerdem weitere unerwünschte Nebenprodukte gebildet werden.

Die Isolierung und Reinigung der Polymeren ist ebenfalls nur unbefriedigend gelöst, da das reichlich mitanfallende Salz zum Teil vom Polymeren eingeschlossen wird und sich nur durch umfangreiche Waschoperationen entfernen läßt. Zur Entfernung von leichtflüchtigen Verunreinigungen, die beim Schmelzextrudieren sehr stören, muß entweder mit großen Mengen an organischen Lösungsmitteln aufwendig gewaschen werden, oder das isolierte Polymere muß bei erhöhter Temperatur "geröstet" werden, was der Reinheit des Polymeren sehr abträglich ist. In jedem Fall ist die Entfernung der flüchtigen Verunreinigungen recht unvollständig. Dies äußert sich auch darin, daß unerwünschte Komponenten beim Schmelzextrudieren, speziell beim Faserspinnen, an die Außenwelt abgegeben werden.

Nach JP H9-278886 wird nach einer konventionellen Polymerisation eine niedermolekulare Fraktion getrennt und mit einem halogenierten aromatischen Kohlenwasserstoff umgesetzt. US 4960861 beschreibt eine Zweiphasenpolymerisation wobei eine niedermolekulares Polymer enthaltende Phase abgetrennt und mit eine m Sulfid und mit halogeniertem Kohlenwasserstoff umgesetzt wird. Nach JP H61-066720 wird ein Präpolymer isoliert und gewaschen. Das Präpolymer wird in Lösungsmittel dispergiert und reagiert zum hochmolekularen Polymer bei 230-290°C. US 4645826, gibt weitere Details über das Verfahren gemäß JP H61-066720; so werden -SNa-Gruppen als Endgruppen des Präpolymers erwähnt.

EP-A-0527055 beschreibt die Herstellung von hochmolekularem PPS durch ringöffnende Polymerisation von cyclischen PPS-Oligomeren. Es ist jedoch schwierig, größere Mengen an PPS so herzustellen, da sich cyclische Oligomere nicht einfach in guter Ausbeute herstellen lassen.

Auch die Stabilität der Schmelzeviskosität (Schmelzestabilität) der Polymere ist nach dem Stand der Technik wenig befriedigend, so daß Stabilisatoren in unterschiedlichen Mengen zugesetzt werden.

Schließlich müssen große Mengen an Lösungsmitteln zurückgewonnen und durch Destillation gereinigt werden, was die Aufarbeitung des Polymeren sehr kostspielig macht. Insgesamt gesehen, ist die Herstellung von hochmolekularem, reinem PPS nach dem Stand der Technik zeitraubend, die Isolierung und Reinigung des Polymeren aufwendig und teuer und die Polymerqualität verbesserungswürdig.

Es bestand daher die Aufgabe Polyarylensulfide in einem breiten Molmassenbereich (z.B. $M_n$ 5000 bis 100000 g/mol) bei kurzen Reaktionszeiten in guter Reinheit herzustellen, wobei auch der Aufwand zur Polymerisolierung und Lösungsmittelrückgewinnung klein bleiben sollte.

Diese Aufgabe wird dadurch gelöst, daß halogenterminierte Oligomere oder Polymere, die Arylensulfid-Einheiten enthalten, hergestellt und diese Produkte, das sogenannte Präpolymer, durch Reaktion mit einer Schwefelverbindung zu einem Polyarylensulfid mit höherer Molmasse als das Präpolymer umgesetzt werden.

Gegenstand der Erfindung ist somit ein Verfahren zur Herstellung von Polyarylensulfiden dadurch gekennzeichnet, daß das Polymer aus einem Präpolymer mit Halogen-Endgruppen gebildet wird, welches durch Reaktion einer Schwefelverbindung mit einem Überschuß an halogenierten aromatischen Kohlenwasserstoffen zugänglich ist.

Vorteilhaft wird bei dem Verfahren in einer ersten Stufe ein Präpolymer mit Halogen-Endgruppen hergestellt und isoliert und in einer zweiten Stufe das Präpolymer durch Reaktion mit einer Schwefelverbindung zu einem Polymer mit höherer Molmasse umgesetzt.

Die Arylen-Bestandteile der Arylensulfid-Einheiten enthalten ein- oder mehrkernige Aromaten oder verbundene Aromaten. Die Aromaten können auch Heteroatome enthalten. Solche Aromaten, die substituiert oder unsubstituiert sein können, sind beispielsweise Benzol, Pyridin, Biphenyl, Naphthalin, Phenantren.

Substituenten sind zum Beispiel $C_1$-$C_6$-Alkyl-, $C_1$-$C_6$-Alkoxy-, Carboxyl-, Amino- und Sulfonsäure-Gruppen. Verbundene Aromaten sind zum Beispiel Biphenyl oder durch Etherbrücken verbundene Aromaten (Arylenether).

Bevorzugte Polymere sind Polyarylensulfide, insbesondere Polyphenylensulfid.

Unter dem Begriff Präpolymer sind halogenterminierte Oligomere oder Polymere zusammengefaßt, die Arylensulfid-Einheiten enthalten. Diese Produkte haben gewöhnlich eine Molmasse, ausgedrückt als Zahlenmittel der Molmasse $M_n$, im Bereich von 500 bis 20000 g/mol. Sie lassen sich durch Reaktion einer Schwefelverbindung, insbesondere anorganischen Sulfiden, mit einem Überschuß an halogenierten aromatischen Kohlenwasserstoffen herstellen, zum Beispiel durch Reaktion von Natriumsulfid mit einem 5 bis 50 %-igen molaren Überschuß an p-Dichlorbenzol in NMP als Lösungsmittel. Sie können linear oder verzweigt sein. Auch ist es möglich durch Einsatz substituierter Dihalogenarylverbindungen (z.B. 2,5-Dichlortoluol) substituierte Präpolymere herzustellen. Die Präpolymere haben einen Halogengehalt an organisch gebundenem Halogen im Bereich von 0,2 bis 10 Gewichtsprozent; typischerweise liegt der Halogengehalt bei 0,5 bis 5 Gewichtsprozent, je nach Molmasse. Das Vorliegen halogenterminierter Oligomere oder Polymere wird experimentell belegt durch das Zahlenmittel ihrer Molmasse und dem Halogengehalt sowie durch ihre $^1$H-NMR-Spektren. Als Halogen-Endgruppe eignen sich die Halogene Fluor, Chlor, Brom und Iod, bevorzugt Chlor und Brom, besonders bevorzugt Chlor.

Als Schwefelverbindungen für die Herstellung des Präpolymeren und des Polymeren eignen sich organische und anorganische Sulfide. Anorganische Sulfide sind Sulfide der Alkali- und Erdalkali-Metalle, wie Lithiumsulfid, Kaliumsulfid, Calciumsulfid und bevorzugt Natriumsulfid. Ein organisches Sulfid ist zum Beispiel das Anlagerungsprodukt von Schwefelwasserstoff und 1,8-Diazabicyclo[5.4.0]undec-7-en (DBU). Es entsteht aus DBU und $H_2S$ im molaren Verhätnis 2:1. Die Salze können als solche zugegeben oder in situ erzeugt werden, so entsteht z. B. das bevorzugt eingesetzte Natriumsulfid aus Natriumhydrogensulfid und Natriumhydroxid. Die Sulfide können auch mit Kristallwasser eingesetzt werden. Es hat sich gezeigt, daß für die erste Stufe ca. 1 mol Wasser pro mol Sulfid vorteilhaft ist.

Als halogenierte aromatische Kohlenwasserstoffe eignen sich Arylendihalogenide unter anderem Dihalogenbenzole wie o-, m- und p-Dichlorbenzol, substituierte Dihalogenbenzole wie 2,5-Dichlortoluol, 3,5-Dichlorbenzoesäure, 2,5-Dichlorbenzolsulfonsäure oder 3,5-Dichlorbenzolsulfonsäure oder deren Salze. Aber auch Dihalogennaphthaline wie 1,4-Dibromnaphthalin oder Dihalogendiphenyläther wie 4,4'-Dichlordiphenyläther können eingesetzt werden. Ebenso können Gemische von verschiedenen Arylendihalogeniden eingesetzt werden. Es können auch kleine Mengen (0,2 bis 5 Molprozent bezogen auf Arylendihalogenid) polyhalogenierte aromatische Kohlenwasserstoffe eingesetzt werden, um zu verzweigten oder vernetzten schwefelhaltigen Polymeren zu gelangen.

Als Lösungsmittel für die Herstellung des Präpolymeren und des Polymeren in zweiter Stufe eignen sich dipolar aprotische Lösungsmittel vom Amidtyp wie Dimethylformamid (DMF), Dimethylacetamid (DMAc), N-Methylcaprolactam oder N-alkylierte Pyrrolidone oder Mischungen davon. Besonders bevorzugt ist NMP. Das Präpolymer ist unter den Reaktionsbedingungen der ersten und zweiten Verfahrensstufe gelöst.

Das Verfahren gemäß der Erfindung wird im folgenden am Beispiel der Herstellung von Polyphenylensulfid (PPS) beschrieben, ohne jedoch darauf beschränkt zu sein.

Zur Herstellung des Präpolymer wird Natriumsulfid mit überschüssigem p-Dichlorbenzol in NMP bis zu etwa 80 bis 95 % umgesetzt. Neben dem Präpolymer enthält dann die Reaktionsmischung ungelöstes Natriumchlorid, nicht umgesetzte Monomere und das Lösemittel NMP. Das gebildete Präpolymer wird aus der Reaktionsmischung abgetrennt. Anschließend wird das Präpolymer in der zweiten Stufe in NMP in der Hitze und unter Druck gelöst und mit wenig Natriumsulfid zum Polymer kondensiert. Das Polymer fällt beim Abkühlen kristallin aus und kann leicht durch Abfiltrieren isoliert werden.

Die Reaktionsbedingungen für die erste Stufe können in weiten Grenzen variiert werden. So können die Reaktionstemperaturen zwischen 180 °C und 270 °C liegen, bevorzugt sind 220 bis 250 °C. Die Reaktionszeiten können 20 Minuten bis 20 Stunden betragen. Bevorzugt sind 1 bis 3 Stunden. Auch Temperaturprogramme können mit Vorteil verwendet werden, z.B. 30 Minuten bei 225°C und anschließend 1 Stunde bei 245 °C.

Die Aufarbeitung des Reaktionsgemisches der ersten Stufe kann auf verschiedene Weise erfolgen:

- Die Abtrennung des Präpolymeren kann durch Abkühlen des Reaktionsgemisches auf Temperaturen unterhalb von 200 °C und einfache Druckfiltration erfolgen. Der Filterkuchen enthält das Präpolymer und Natriumchlorid. Das Natriumchlorid läßt sich durch Waschen mit Wasser entfernen.
- Es ist auch möglich das Reaktionsgemisch in einer Entspannungsverdampfung oder Sprühtrocknung aufzuarbeiten. Dabei werden NMP und p-Dichlorbenzol entfernt. PPS und Natriumchlorid fallen als weitgehend trockenes Feststoffgemisch an, aus dem das Natriumchlorid ausgewaschen werden kann.
- Vorteilhaft ist auch eine Filtration der 220 bis 240 °C heißen Reaktionsmischung unter Druck, wobei das Kochsalz als Filterrückstand abgetrennt wird. Das Filtrat enthält das gelöste Präpolymer. Beim Abkühlen des Filtrates unter 200 °C kristallisiert das Präpolymer aus und kann dann leicht durch einfache Filtration (z.B. Vakuum-Filtration) abgetrennt werden. Das abfiltrierte Lösemittel kann zur Herstellung von Präpolymer wiederverwendet werden.

Zur Herstellung des Polymers wird das Präpolymer in NMP unter Druck bei Temperaturen von 230 °C gelöst und in homogener Lösung mit Natriumsulfid umgesetzt. Die Konzentration des Präpolymeren liegt dabei zweckmäßigerweise möglichst hoch. Sie kann zwischen 15 und 90 Gewichtsprozent liegen, bevorzugt zwischen 20 und 60 Gewichtsprozent, besonders bevorzugt zwischen 30 und 50 Gewichtsprozent. Die Menge an zugesetztem Natriumsulfid bestimmt die Molmasse der Polymere. Trägt man die Molmasse als Funktion des Massenverhältnisses von Natriumsulfid/Präpolymer auf, so ergibt sich ein ausgeprägtes Maximum bei einem Verhältnis von Natriumsulfid/Präpolymer, das folgender Gleichung folgt:

$$m\,(Na_2S) = m\,(PP)\ x\ P_{Cl}.$$

Hierbei bedeuten:

m ($Na_2S$) : Masse des zugesetzten Natriumsulfids (wasserfrei)
m (PP) : Masse des eingesetzten Präpolymeren
$P_{Cl}$ : Gewichtsanteil organisch gebundenen Chlors im Präpolymeren, das heißt Massenverhältnis gebundenes Chlor/Präpolymer (z.B.: 2 Gewichtsprozent = 0,02)

Die Reaktionstemperaturen liegen in der zweiten Stufe bei 220 bis 260 °C, bevorzugt bei 230 bis 255 °C und die Reaktionszeiten betragen 30 Minuten bis 5 Stunden, bevorzugt 1 bis 3 Stunden. Am Ende der Reaktion liegt das Polymere in Form einer fast klaren, viskosen Lösung vor, aus der es beim Abkühlen auskristallisiert. Das auskristallisierte PPS kann durch einfache Filtration leicht isoliert werden. Durch Waschen mit etwas NMP läßt es sich von Mutterlaugenresten befreien. Nach dem Waschen mit warmem Wasser wird das Polymere getrocknet.

Die Schmelzpunkte der Polyphenylensulfide liegen zwischen 270 °C und 305 °C, typisch sind 280 bis 295 °C. Die Schmelzviskosität liegt im Bereich von 5000 bis 500000 mPas (centiPoise), bevorzugt bei 50000 bis 250000 mPas (centiPoise). Die Schmelzeviskosität ist ohne Zusätze stabil: Bei 300 °C verändert sie sich über einen Zeitraum von 1 Stunde um weniger als 10%.

Die gemäß der Erfindung hergestellten Polyarylensulfide lassen sich durch Schmelzextrusion zu Formkörpern verarbeiten. Aber auch Folien und Fasern mit guten mechanischen Eigenschaften lassen sich herstellen.

Das neue Verfahren hat eine Reihe von Vorteilen:

- Das bei der Synthese zwangsläufig reichlich anfallende Salz läßt sich sehr einfach von den kristallinen Präpolymeren abtrennen, ohne daß es zu Einschlüssen kommt. Daher ist diese Abtrennung bei dem neuen Verfahren schnell und effektiv. Die Präpolymeren können, da sie kristallin sind, ebenfalls sehr einfach gereinigt werden und so ist das aus ihnen hergestellte Polymere sehr rein und enthält praktisch keine flüchtigen Verunreinigungen.

- Auch weist das Polymere eine sehr hohe Rekristallisationstemperatur (aus der Schmelze) auf und ist inhärent schmelzestabil, ohne jede Zusätze.

- Außerdem kann die Mutterlauge der ersten Stufe direkt ohne Reinigungsschritte (z.B. Destillation) zur Herstellung des Präpolymeren wiederverwendet werden, was ein erheblicher Zeit- und Kostenvorteil ist.

- Ferner ist der Verlust an Lösungsmittel durch Zersetzung kleiner als bei herkömmlichen Verfahren, die mit Wasser im Reaktionsmedium bei hohen Temperaturen arbeiten, was dem Lösungsmittelabbau Vorschub leistet und auch das Polymere weiter verunreinigt. Bei dem neuen Verfahren wird kein Wasser zugesetzt, die Reaktionstemperaturen liegen niedriger und die Reaktionszeiten sind kürzer.

- Schließlich entstehen bei dem neuen Verfahren keine sogenannten "Fines"(Gemisch aus niedermolekularen, zum Teil cyclischen, feinpulverigen Oligomeren), die als Nebenprodukt entstehen, abgetrennt und entsorgt werden müssen.

Zusammengefaßt liefert das neue Verfahren ein Produkt höherer Qualität bei geringerem Kostenaufwand.

Die folgenden Beispiele sollen die Erfindung erläutern:

Beispiel 1.

Herstellung des Präpolymeren PP1:

In einem 2 Liter-Titanautoklaven wird eine Mischung aus 300 ml NMP, 79,2 g $Na_2S$ x 3 $H_2O$, 132,3 g p-Dichlorbenzol (DCB) und 49,2 g Natriumacetat unter Rühren zunächst für 30 min auf 220 °C und danach 30 min auf 245 °C erhitzt. Anschließend wird der abgekühlte Reaktorinhalt auf 2,5 l Wasser gegeben, das zuvor mit 15 ml konzentrierte Salzsäure versetzt wurde. Der ausgefallene Niederschlag wird abgesaugt, mit 2 l Wasser und dann mit 700 ml Aceton gewaschen. Anschließend wird er über Nacht mit Tetrahydrofuran (THF) extrahiert. Die Ausbeute an vorwiegend chlorterminierten

Oligomeren beträgt 55%. Der Chlor-Gehalt (organisch gebundenes Chlor) der Probe lag bei 3,8 Gewichtsprozent. Dies entspricht einer Molmasse $M_n$ von 1870 g/mol.

Beispiel 2.

Herstellung des Präpolymeren PP2.

In einem 250 ml-Glasautoklaven wird eine Mischung aus 100 ml NMP, 26,4 g $Na_2S$ x 3 $H_2O$ und 3 ml Wasser langsam auf 200 °C erhitzt, wobei 13,5 ml Kondensat abdestillieren. Zu der auf 180 °C abgekühlten Mischung werden 39,4 g p-Dichlorbenzol gegeben. Es wird 30 min auf 230 °C und dann 1 h auf 245 °C erhitzt. Der abgekühlte Reaktorinhalt wird über eine Nutsche unter weitgehendem Luftabschluß abgesaugt und mit 20 ml NMP gewaschen. Die Mutterlauge wird unter Luftausschluß (Schutzgas) aufbewahrt (vgl. Beispiel 3). Der Niederschlag wird in Wasser kurz aufgekocht, abgesaugt und getrocknet. Ausbeute 18,8 g (87%).

Beispiel 3.

Wiederverwendung der Mutterlauge zur Präpolymerherstellung:

100 ml der Mutterlauge aus Beispiel 2 werden in einem 250 ml-Titanautoklaven mit 26,4 g $Na_2S$ x 3 $H_2O$ langsam auf 203 °C erwärmt, wobei 13 ml Wasser und 2 g DCB abdestillieren. Danach werden 31,4 g DCB bei 180 °C zugegeben und der Reaktorinhalt unter Rühren 30 min auf 230 °C und anschließend 1 h auf 247 °C erhitzt. Nach dem Abkühlen wird der Reaktorinhalt abgesaugt, der Rückstand mit NMP gewaschen und in Wasser kurz aufgekocht. Der weiße Niederschlag wird abgesaugt und getrocknet. Ausbeute 19,7 g (91 %).

Beispiel 4.

Herstellung von hochmolekularem PPS:

31,2 g Präpolymer PP1 aus Beispiel 1 werden in einem 250 ml-Glasautoklaven unter Rühren in 60 ml NMP suspendiert und mit 2,0 g $Na_2S$ x 3 $H_2O$, 1,15 g Natriumacetat und 0,5 ml $H_2O$ unter Luftabschluß versetzt. Anschließend wird unter Rühren für 2 h auf 245 °C erwärmt. Die weitgehend homogene, viskose Lösung wird abgekühlt und mit 40 ml NMP verdünnt. Der kristalline Niederschlag wird abgesaugt, mit NMP gewaschen und in Wasser kurz aufgekocht. Nach dem Absaugen wird das Polymere getrocknet. Ausbeute: 95%.
Das PPS hat eine Schmelzeviskosität von 177000 mPas bei 300 °C und einer Scherrate von 10 min$^{-1}$. Nach einer Stunde bei 300 °C beträgt sie 172000 mPas. Der Schmelzpunkt beim 1. Aufheizen liegt bei 293 °C, die Rekristallisationstemperatur beim Abkühlen aus der Schmelze bei 246 °C und der Schmelzpunkt beim 2. Aufheizen liegt bei 285 °C.

Beispiel 5

Charakterisierung der chlorterminierten Präpolymeren

2,5 g des Präpolymers werden in 50 ml 85 Gew.-% $HNO_3$ bei T = - 20 °C suspendiert. Unter Rühren läßt man die Suspension sich langsam auf T = 0 °C erwärmen und führt die Reaktion noch ½ h bei dieser Temperatur weiter. Während dieser Reaktionszeit geht das gebildete Polyphenylensulfoxid (PPSO) in der Säure in Lösung. Nach insgesamt 1 h gibt man die Lösung in 1 l Eiswasser, filtriert das ausgefallene PPSO ab und wäscht bis zur pH-Neutralität des Waschwassers nach. Zur Bestimmung des Polymerisationsgrades wird das getrocknete Produkt in deuterierter $HNO_3$ aufgelöst und anschließend sofort ein Protonen-NMR-Spektrum aufgenommen. Man erhält ein breites Singulett-Signal bei $\delta$ = 7,4 ppm, welches den Protonen der durch zwei paraständige Sulfoxidgruppen substituierten Phenylenringe zugeordnet wird. Für jedes Präpolymermolekül gehört dieses Signal zu 4(n-1) Protonen (n = Polymerisationsgrad). Außerdem werden noch zwei Dubletts bei $\delta$ = 7,15 ppm und $\delta$ = 7,05 ppm beobachtet, die den endständigen Phenylenringen zugeordnet werden. Dieses Signal wird von je 8 Protonen pro Präpolymerkette verursacht.
Durch Vergleich der integrierten Signalintensitäten des Singuletts bei $\delta$ = 7,4 ppm mit den Intensitäten der Dubletts $\delta$ = 7,15 ppm und $\delta$ = 7,05 ppm wird der mittlere Polymerisationsgrad der Präpolymeren bestimmt. Er läßt sich nach folgender Formel berechnen:

$$\_P_n = 1 + 2 \times Is / Id$$

Hierbei bedeuten: Pn Zahlenmittel des Polymerisationsgrades des Präpolymeren
Is : relative Intensität des Singulet peaks bei 7.4 ppm
Id: relative Intensität der Summe der beiden Dublet peaks bei 7.15 und 7.05 ppm.

Aus dem elementaranalytisch bestimmten Gehalt organisch gebundenen Chlors läßt sich ebenfalls Pn unabhängig nach folgender Formel bestimmen:

$$Pn = (71/Pcl - 147)/108$$

Hierbei bedeuten:
Pn: Zahlenmittelwert der Polymeristionsgrades
Pcl: Gewichtsanteil organisch gebundenen Chlors im Präpolymeren

Aus der quantitativen Auswertung der NMR-Spektren ergibt sich, daß die Endgruppen zu über 90 Prozent Chlorendgruppen sind. Die Elementaranalyse bestätigt, daß die zugeordneten Signale tatsächlich von Chlorendgruppen stammen.

Beispiel 6

In einem 2 l - Titanautoklaven werden 900 ml NMP, 30 ml Wasser und 256 g $Na_2S \cdot 2,8\,H_2O$ unter Stickstoff-Atmosphäre vorgelegt und unter Rühren auf T = 190 °C erhitzt. Bei dieser Temperatur werden 100 ml Kondensat abdestilliert. Zu der auf T = 180 °C abgekühlten Mischung werden 390 g p-Dichlorbenzol (2,65 mol) gegeben. Der Reaktor wird 2 h lang auf T = 230 °C erhitzt. Dann wird auf T = 240 °C aufgeheizt und 100 ml Destillat durch vorsichtiges Entspannen über ein Ventil abgenommen.
Die Reaktionsmischung wird auf T = 130 °C abgekühlt und anschließend in einer auf diese Temperatur thermostatisierten Druckfilternutsche filtriert. Der Filterkuchen wird zunächst mit Aceton, dann zur Entfernung des NaCl dreimal mit heißem Wasser gewaschen und anschließend getrocknet. Man erhält 164 g des Präpolymeren entsprechend einer Ausbeute von 76 %.
Gemäß der in Beispiel 5 beschriebenen Methode wird das PPS-Präpolymer zu PPSO oxidiert und NMR-spektroskopisch charakterisiert. Der ermittelte Polymerisationsgrad beträgt $P_n$ = 49. Der Gehalt des organisch gebundenen Chlors beträgt 1,35 %. Daraus errechnet sich ein Polymerisationsgrad von 47.
Im Filtrat der heißen Druckfiltration bildet sich nach dem Erkalten ein Niederschlag. Dieser wird durch Filtrieren abgetrennt und ebenso wie der Filterkuchen der ersten, heißen Filtration aufgearbeitet. Man erhält ein PPS-Oligomer mit einem nach der bereits beschriebenen NMR-Methode bestimmten Oligomerisationsgrad von $P_n$ = 12. Der Gehalt organisch gebundenen Chlors wird zu 5,15 % analysiert, entsprechend einem Oligomerisationsgrad von $P_n$ = 11.

**Patentansprüche**

1.  Verfahren zur Herstellung von Polyarylensulfiden, wobei in einer ersten Stufe ein Präpolymer mit Halogen-Endgruppen durch Reaktion einer Schwefelverbindung mit einem Überschuß an halogenierten aromatischen Kohlenwasserstoffen gebildet und isoliert wird und in einer zweiten Stufe ein oder mehrere Präpolymere durch Reaktion mit Sulfiden in das Polymer mit höherer Molmasse umgewandelt werden.

2.  Verfahren nach Anspruch 1, wobei Polyarylensulfid ein Polyphenylensulfid ist.

3.  Verfahren nach Anspruch 1 oder 2, wobei ein Präpolymer mit ChlorEndgruppen eingesetzt wird, dessen Zahlenmittel der Molmasse $M_n$ 500 bis 20000 g/mol beträgt.

4.  Verfahren nach einem oder mehreren der Ansprüche 1 bis 3, wobei zur Herstellung des Präpolymeren mindestens ein Sulfid der Alkali- oder Erdalkalimetalle oder dessen Hydrate verwendet wird.

5.  Verfahren nach einem oder mehreren der Ansprüche 1 bis 4, wobei zur Herstellung des Präpolymeren mindestens ein aromatischer dihalogenierter Kohlenwasserstoff, insbesondere mindestens eine der Verbindungen Dichlorbenzol oder Dichlorbenzolsulfonsäure, verwendet wird.

6.  Verfahren nach einem oder mehreren der Ansprüche 1 bis 5, wobei zur Herstellung des Präpolymeren das molare Verhältnis von aromatischen dihalogenierten Kohlenwasserstoffen zu Sulfid mindestens 1,1 ist.

7.  , Verfahren nach einem oder mehreren der Ansprüche 1 bis 6, wobei das Präpolymer in einer Konzentration von mindestens 20 Gewichtsprozent in dem Reaktionsgemisch bei der Herstellung des Polymeren vorliegt.

8.  Verfahren nach einem oder mehreren der Ansprüche 1 bis 7, wobei der Gehalt an Wasser in dem Reaktionsgemisch bei der Herstellung des Polymeren aus dem Präpolymeren weniger als 2 Gewichtsprozent beträgt.

9.  Verfahren nach einem oder mehreren der Ansprüche 1 bis 8, wobei während der Herstellung des Polymeren aus dem Präpolymeren weniger als 5 Gewichtsprozent ungelöster Feststoffe im Reaktionsgemisch vorliegen.

**Claims**

1.  A process for the preparation of a polyarylene sulfide, which comprises, in a first step, forming and isolating a prepolymer having halogen end groups by reacting a sulfur compound with an excess of halogenated aromatic hydrocarbons and, in a second stage, converting one or more prepolymers into the polymer with relatively high molecular weight by reaction with sulfides.

2.  The process as claimed in claim 1, wherein the polyarylene sulfide is a polyphenylene sulfide.

3.  The process as claimed in claim 1 or 2, wherein a prepolymer having chlorine end groups, the number-average molecular weight $M_n$ of which is 500 to 20000 g/mol, is employed.

**4.** The process as claimed in one or more of claims 1 to 3, wherein at least one sulfide of the alkali metals or alkaline earth metals or a hydrate thereof is used for preparation of the prepolymer.

**5.** The process as claimed in one or more of claims 1 to 4, wherein at least one aromatic dihalogenated hydrocarbon, in particular at least one of the compounds dichlorobenzene or dichlorobenzenesulfonic acid, is used for preparation of the prepolymer.

**6.** The process as claimed in one or more of claims 1 to 5, wherein the molar ratio of aromatic dihalogenated hydrocarbons to sulfide is at least 1.1 for preparation of the prepolymer.

**7.** The process as claimed in one or more of claims 1 to 6, wherein the prepolymer is present in the reaction mixture for preparation of the polymer in a concentration of at least 20% by weight.

**8.** The process as claimed in one or more of claims 1 to 7, wherein the content of water in the reaction mixture during preparation of the polymer from the prepolymer is less than 2 percent by weight.

**9.** The process as claimed in one or more of claims 1 to 8, wherein less than 5 percent by weight of undissolved solids are present in the reaction mixture during preparation of the polymer from the prepolymer.

**5.** Procédé selon l'une ou plusieurs des revendications 1 à 4, dans lequel on utilise au moins un hydrocarbure dihalogéné aromatique, en particulier au moins l'un des composés dichlorobenzène ou acide dichlorobenzènesulfonique, pour la préparation du prépolymère.

**6.** Procédé selon l'une ou plusieurs des revendications 1 à 5, dans lequel le rapport molaire entre les hydrocarbures dihalogénés aromatiques et le sulfure est d'au moins 1,1 pour la préparation du prépolymère.

**7.** Procédé selon l'une ou plusieurs des revendications 1 à 6, dans lequel le prépolymère est présent en une concentration d'au moins 20 pour cent en poids dans le mélange réactionnel, lors de la préparation du polymère.

**8.** Procédé selon l'une ou plusieurs des revendications 1 à 7, dans lequel la teneur en eau dans le mélange réactionnel, lors de la préparation du polymère à partir du prépolymère, est inférieure à 2 pour cent en poids.

**9.** Procédé selon l'une ou plusieurs des revendications 1 à 8, dans lequel moins de 5 pour cent en poids de matières solides non dissoutes sont présents dans le mélange réactionnel durant la préparation du polymère à partir du prépolymère.

**Revendications**

**1.** Procédé de préparation de polysulfures d'arylène, dans lequel, dans une première étape, un prépolymère ayant des groupes terminaux halogéno est formé par réaction d'un composé soufré avec un excès d'hydrocarbures aromatiques halogénés et isolé, et dans une deuxième étape, un ou plusieurs prépolymères sont transformés par réaction avec des sulfures en polymère ayant une masse molaire supérieure.

**2.** Procédé selon la revendication 1, dans lequel le polysulfure d'arylène est un polysulfure de phénylène.

**3.** Procédé selon la revendication 1 ou 2, dans lequel on utilise un prépolymère ayant des groupes terminaux chloro dont la masse molaire moyenne en nombre $M_n$ est de 500 à 20 000 g/mol.

**4.** Procédé selon l'une ou plusieurs des revendications 1 à 3, dans lequel on utilise au moins un sulfure des métaux alcalins ou alcalino-terreux ou ses hydrates pour la préparation du prépolymère.